# EUROPÄISCHE PATENTSCHRIFT

(11) **EP 3 640 479 B1**
(45) Veröffentlichungstag und Bekanntmachung des Hinweises auf die Patenterteilung: **26.05.2021**
(21) Anmeldenummer: 18465609.8
(22) Anmeldetag: 15.10.2018
(51) Int. Cl.: F04B 53/08, F04B 39/06, F04B 17/03, F04C 29/04, F04C 15/00, F04C 2/10, F04D 29/58, H02K 9/19

(54) **PUMPVORRICHTUNG, FLUIDFÖRDERANORDNUNG UND VERFAHREN ZUM KÜHLEN EINES ELEKTRISCHEN ANTRIEBSMOTORS DER PUMPVORRICHTUNG**
PUMPING DEVICE, FLUID PUMPING ARRANGEMENT AND METHOD FOR COOLING AN ELECTRIC DRIVE MOTOR OF THE PUMPING DEVICE
DISPOSITIF POMPE, ENSEMBLE DE TRANSPORT DE FLUIDE ET PROCÉDÉ DE REFROIDISSEMENT D'UN MOTEUR À ENTRAÎNEMENT ÉLECTRIQUE DU DISPOSITIF DE POMPE

(43) Veröffentlichungstag der Anmeldung: 22.04.2020
(73) Patentinhaber: Vitesco Technologies Germany GmbH, 30165 Hannover (DE)
(72) Erfinder: Farago, Andrei, 410008 Oradea (RO); Susan-Resiga, Romeo, 300650 Timisoara (RO)
(74) Vertreter: Waldmann, Georg Alexander

(56) Entgegenhaltungen:
- DE-A1- 19 952 902
- DE-A1-102004 009 474
- DE-A1-102016 009 248
- JP-A- S61 139 245
- US-A1- 2004 247 458
- US-A1- 2013 263 899

## Beschreibung

Die Erfindung betrifft eine Pumpvorrichtung nach den Merkmalen des Oberbegriffs des Patentanspruchs 1, eine Fluidförderanordnung und ein Verfahren zum Kühlen eines elektrischen Antriebsmotors einer Pumpvorrichtung.

Aus dem Stand der Technik sind Pumpvorrichtungen, umfassend eine Pumpe und eine Antriebseinheit mit einem elektrischen Antriebsmotor für die Pumpe, d. h. zum Antrieb der Pumpe, allgemein bekannt. Derartige Pumpvorrichtungen sind Bestandteil einer Fluidförderanordnung, um ein Fluid mittels der Pumpe zu fördern, beispielsweise in einem Kreislauf oder von einem Behältnis in ein anderes Behältnis . Eine Kühlung des elektrischen Antriebsmotors erfolgt dabei durch eine Wärmeabgabe über ein Gehäuse der Antriebseinheit an dessen äußere Umgebung

Eine Pumpvorrichtung mit den Merkmalen des Oberbegriffs von Anspruch ist z.B. aus dem Dokument DE-102016009248-A1 bekannt.

Der Erfindung liegt die Aufgabe zugrunde, eine gegenüber dem Stand der Technik verbesserte Pumpvorrichtung eine gegenüber dem Stand der Technik verbesserte Fluidförderanordnung und ein gegenüber dem Stand der Technik verbessertes Verfahren zum Kühlen eines elektrischen Antriebsmotors einer Pumpvorrichtung anzugeben.

Die Aufgabe wird erfindungsgemäß gelöst durch eine Pumpvorrichtung mit den Merkmalen des Patentanspruchs 1, eine Fluidförderanordnung mit den Merkmalen des Anspruchs 7 und ein Verfahren zum Kühlen eines elektrischen Antriebsmotors einer Pumpvorrichtung mit den Merkmalen des Patentanspruchs 8 . Vorteilhafte Ausgestaltungen der Erfindung sind Gegenstand der Unteransprüche.

Eine Pumpvorrichtung umfasst eine Pumpe und eine Antriebseinheit mit einem elektrischen Antriebsmotor für die Pumpe, d. h. zum Antrieb der Pumpe.

Erfindungsgemäß weist die Antriebseinheit mindestens eine Kühleinheit zum Kühlen des elektrischen Antriebsmotors auf, die mit der Pumpe fluidisch verbunden ist.

Durch die erfindungsgemäße Lösung wird auf einfache, kostengünstige und effiziente Weise eine Flüssigkeitskühlung des beispielsweise als bürstenloser Gleichstrommotor ausgebildeten elektrischen Antriebsmotors erreicht, indem ein mittels der Pumpe gefördertes Fluid, insbesondere nur ein Anteil dieses von der Pumpe geförderten Fluids, durch die mindestens eine Kühleinheit hindurchgeleitet und somit zur Kühlung des elektrischen Antriebsmotors verwendet wird. Danach kann dieses zur Kühlung verwendete Fluid wieder in ein Reservoir zurückgeleitet werden, aus welchem es mittels der Pumpe gefördert wird. Alternativ kann es beispielsweise an eine andere Stelle geleitet werden. Dies ist beispielsweise abhängig von einer jeweiligen Verwendung der Pumpvorrichtung.

Durch die erfindungsgemäße Lösung wird somit ein thermisches Management des elektrischen Antriebsmotors durch Verringern seiner Temperatur verbessert. Dadurch kann seine Leistungsfähigkeit verbessert werden und es kann ein besserer Kompromiss zwischen Leistung und Größe des elektrischen Antriebsmotors erreicht werden.

Ein besonderer Vorteile der erfindungsgemäßen Lösung ist, dass als Fluid zur Kühlung des elektrischen Antriebsmotors ein bereits vorhandenes und bereits strömendes Arbeitsfluid verwendet wird, nämlich das von der Pumpe geförderte Fluid. Ein separater Kühlkreislauf mit einem weiteren Kühlmedium und beispielsweise ein zusätzlicher Wärmetauscher zum Kühlen dieses Kühlmediums sind somit nicht erforderlich. Die erfindungsgemäße Lösung weist somit ein geringes Gewicht und einen geringen Bauraumbedarf auf und ist kostengünstig realisierbar.

Ein durch die erfindungsgemäße Lösung auftretender volumetrischer Wirkungsgradverlust ist relativ gering, insbesondere vernachlässigbar gering. Er beträgt beispielsweise lediglich ca. 1,5% einer volumetrischen Abflussrate der Pumpe. D. h. der Anteil des von der Pumpe geförderten Fluids, welcher durch die mindestens eine Kühleinheit geleitet wird, beträgt beispielsweise nur 1,5% oder ca. 1,5% des gesamten von der Pumpe geförderten Fluids. Durch die erfindungsgemäße Lösung wird somit bei einem geringen, insbesondere vernachlässigbaren, volumetrischen Wirkungsgradverlust Abwärme des elektrischen Antriebsmotors auf das mittels der Pumpe geförderte Fluid übertragen und dadurch der elektrische Antriebsmotor gekühlt.

Die Pumpvorrichtung ist daher insbesondere derart ausgebildet, dass nur ein Anteil, insbesondere kleiner Anteil, insbesondere ein sehr kleiner Anteil, des von der Pumpe geförderten Fluids durch die mindestens eine Kühleinheit geleitet wird oder leitbar ist, insbesondere nur ein Anteil von maximal 10%, insbesondere maxial 5%, insbesondere maximal 3%, insbesondere maximal 2%, vorteilhafterweise maximal 1,5%, des von der Pumpe geförderten Fluids.

Zweckmäßigerweise weist, um die Kühlung zu ermöglichen, das von der Pumpe geförderte Fluid, insbesondere das in die Kühleinheit eintretende Fluid, eine geringere Temperatur als der elektrische Antriebsmotor auf. Ein Temperaturunterschied zwischen der Temperatur des elektrischen Antriebsmotors und der Temperatur des in die mindestens eine Kühleinheit einströmenden Fluids liegt beispielsweise bei mindestens 10 Kelvin, beispielweise beträgt er 10, 15, 20, 25, 30 oder 35 Kelvin. Der elektrische Antriebsmotor wird dann gekühlt, indem Abwärme vom elektrischen Antriebsmotor über die mindestens eine Kühleinheit auf das die mindestens eine Kühleinheit durchströmende Fluid übertragen wird und dann mittels des aus der mindestens einen Kühleinheit ausströmenden Fluids aus der Antriebseinheit abgeführt wird. Das Fluid weist somit beim Einströmen in die mindestens eine Kühleinheit eine geringere Temperatur auf als beim Ausströmen aus der mindestens einen Kühleinheit.

Ein weiterer besonderer Vorteil ist, dass durch die erfindungsgemäße Lösung und die dadurch erreichte verbesserte Kühlung der Wirkungsgrad des elektrischen Antriebsmotors erhöht wird.

Die Pumpvorrichtung ist beispielsweise zur Verwendung im Fahrzeugbereich, insbesondere im Automobilbereich, vorgesehen, d. h. sie ist beispielsweise als eine Pumpvorrichtung für ein Fahrzeug ausgebildet, insbesondere als eine Ölpumpvorrichtung, beispielsweise für einen Ölkreislauf des Fahrzeugs, zum Beispiel für einen Ölkreislauf eines Antriebsmotors des Fahrzeugs. Bei einer derartigen Verwendung der Pumpvorrichtung ist der Ölkreislauf das Reservoir, aus welchem die Pumpe das Fluid, in diesem Fall das Öl, fördert und in welchen das durch die mindestens eine Kühleinheit hindurchgeleitete Öl auch wieder zurückfließt.

Lösungen für das thermische Management aus dem Stand der Technik bekannter Pumpvorrichtungen, insbesondere Ölpumpvorrichtungen, für den automobilen Bereich umfassen ein beispielsweise gegossenes oder gepresstes Gehäuse für den elektrischen Antriebsmotor, über welche Abwärme des elektrischen Antriebsmotors an eine äußere Umgebung abgeleitet wird. Weitere Kühlungsmöglichkeiten sind nicht vorgesehen. Dadurch ist ein Wirkungsgrad der elektrischen Antriebsmotoren für derartige Pumpen aufgrund der nicht ausreichenden Kühlung begrenzt, denn der Wirkungsgrad nimmt bei ansteigender Temperatur ab. Motordrehmomentverluste aufgrund hoher Temperaturen werden im Stand der Technik beispielsweise durch größere elektrische Antriebsmotoren, d. h. mit höherer Leistung und größeren Abmessungen, kompensiert. Dies führt jedoch zu höheren Kosten, höherem Gewicht und einem größeren Bauraumbedarf und ist aus Sicht des thermischen Managements nicht effizient. Zudem können beispielsweise hohe Temperaturen am Gehäuse der Antriebseinheit auftreten. Des Weiteren kann eine thermische Stabilität der Antriebseinheit beeinträchtigt sein, insbesondere bei einem umspritzten Stator des elektrischen Antriebsmotors.

Diese Nachteile des Standes der Technik werden durch die hier beschriebene Lösung und die dadurch erreichte verbesserte Kühlung des elektrischen Antriebsmotors vermieden. Die hier beschriebene Lösung weist insbesondere im Vergleich zu den im Stand der Technik verwendeten größeren Antriebsmotoren ein geringeres Gewicht, einen geringeren Bauraumbedarf und geringere Kosten auf.

Beispielsweise ist an einem Pumpenauslass der Pumpe ein Abzweig vorgesehen, welcher mit einem Kühleinheiteinlass der mindestens einen Kühleinheit fluidisch verbunden ist. Auf diese Weise wird nicht das gesamte von der Pumpe geförderte Fluid, sondern nur ein Anteil, insbesondere ein kleiner Anteil, des geförderten Fluids über den Abzweig in die Kühleinheit und durch diese hindurch geleitet, beispielsweise ein Anteil von maximal 10%, insbesondere maxial 5%, insbesondere maximal 3%, insbesondere maximal 2%, insbesondere maximal 1,5% des von der Pumpe geförderten Fluids. Dadurch wird insbesondere der volumetrische Wirkungsgradverlust begrenzt, da nur ein kleiner Anteil des von der Pumpe geförderten Fluids durch einen möglicherweise verringerten Strömungsquerschnitt der mindestens einen Kühleinheit geleitet wird und der größere Anteil, insbesondere der wesentlich größere Anteil, des von der Pumpe geförderten Fluids weiterhin durch einen herkömmlichen Strömungsquerschnitt beispielsweise eines herkömmlichen Ölkreislaufs des Fahrzeugs strömt.

In einer möglichen Ausführungsform ist ein Kühleinheitauslass der mindestens einen Kühleinheit mit einem Pumpeneinlass der Pumpe fluidisch verbunden. Dies ist insbesondere bei einem Fluidkreislauf der Fall, d. h. das Fluid wird in einem geschlossenen oder zumindest im Wesentlichen geschlossenen Reservoir mittels der Pumpe gefördert. Diese fluidische Verbindung kann beispielsweise auf direkte Weise erfolgen, indem beispielsweise eine Verbindungsleitung den Kühleinheitauslass mit einem Abzweig des Pumpeneinlasses verbindet, d. h. unmittelbar vor dem Pumpeneinlass in den Kreislauf mündet, oder sie kann beispielsweise auf indirekte Weise erfolgen, indem diese Verbindungsleitung beispielsweise in einen anderen Bereich des Reservoirs mündet, zum Beispiel in eine Ölwanne, aus welcher die Pumpe das zu fördernde Fluid ansaugt.

Die mindestens eine Kühleinheit ist beispielweise in einem Gehäuseinnenraum und/oder in einer Gehäusewand des Gehäuses der Antriebseinheit angeordnet. Durch die Anordnung im Gehäuseinnenraum ist beispielsweise ein direkter thermischer Kontakt zwischen dem elektrischen Antriebsmotor und der mindestens einen Kühleinheit und somit eine besonders gute Wärmeübertragung möglich.

Bei der Ausführungsform der Anordnung in der Gehäusewand steht beispielsweise die Gehäusewand in thermischem Kontakt, insbesondere in direktem thermischen Kontakt, zum elektrischen Antriebsmotor. Die Wärmeübertragung erfolgt dann beispielsweise über das Gehäuse auf die mindestens eine Kühleinheit. Dies hat den Vorteil, dass zusätzlich eine Wärmeabgabe eines Teils der Abwärme auf herkömmliche Weise über eine äußere Gehäuseoberfläche an die äußere Umgebung der Antriebseinheit ermöglicht wird. Die Kühlung des elektrischen Antriebsmotors erfolgt dann mittels der mindestens einen Kühleinheit durch Flüssigkeitskühlung und zusätzlich über das Gehäuse durch Wärmeabgabe, beispielsweise über Konvektion und/oder Strahlung, an die äußere Umgebung.

Die mindestens eine Kühleinheit ist beispielsweise als eine Buchse ausgebildet. Vorteilhafterweise umgibt diese Buchse den elektrischen Antriebsmotor zumindest umfangsseitig, d. h. insbesondere entlang einer in Axialrichtung des elektrischen Antriebsmotors verlaufenden Außenseite des elektrischen Antriebsmotors. Dadurch wird eine großflächige und gleichmäßige thermische Kontaktierung der mindestens einen Kühleinheit zum elektrischen Antriebsmotor und somit eine gleichmäßige Kühlung durch Übertragung der Abwärme des elektrischen Antriebsmotors auf die Kühleinheit und das diese durchströmende Fluid ermöglicht. Beispielsweise umschließt die als Buchse ausgebildete mindestens eine Kühleinheit eine Außenseite eines Stators des elektrischen Antriebsmotors umfangsseitig.

Beispielsweise kann/können, alternativ oder zusätzlich, eine Stirnseite oder beide Stirnseiten, jeweils zumindest bereichsweise, von der mindestens einen Kühleinheit umgeben sein. Dadurch wird die thermische Kontaktierung zwischen der mindestens einen Kühleinheit und dem elektrischen Antriebsmotor und somit die Kühlung des elektrischen Antriebsmotors weiter verbessert.

Die mindestens eine Kühleinheit umfasst beispielsweise ein poröses Material, beispielsweise ein metallisches Material oder ein nichtmetallisches Material, oder ist aus einem solchen Material ausgebildet. Das Metall ist beispielsweise Kupfer, Aluminium, Kobalt, eine Nickel-Chrom-Legierung oder eine Eisen-Chrom-Legierung oder ein anderes Metall oder eine andere Metalllegierung. Dadurch wird eine effiziente Wärmeübertragung vom elektrischen Antriebsmotor über die Kühleinheit auf das diese durchströmende Fluid erreicht, insbesondere aufgrund einer durch die poröse Struktur erreichten großen Innenoberfläche, welche von dem Fluid umströmt wird, so dass ein großflächiger thermischer Kontakt zwischen dieser Innenoberfläche der mindestens einen Kühleinheit und dem die mindestens eine Kühleinheit durchströmenden Fluid erreicht wird. Die mindestens eine Kühleinheit ist somit als ein hocheffizienter Radiator, insbesondere Wärmetauscher, ausgebildet. Des Weiteren wird dadurch ein relativ geringer volumetrischer Wirkungsgradverlust erreicht, insbesondere da nur ein kleiner Anteil des von der Pumpe geförderten Fluids durch die auf diese Weise ausgebildete mindestens eine Kühleinheit gepumpt wird.

Dieses Material ist beispielsweise ein Kupferschaum, d. h. ein poröses, insbesondere offenporiges, Kupfermaterial. Insbesondere weist Kupfer eine besonders gute Wärmeleitfähigkeit auf. Alternativ kann das Material ein Schaum, d. h. ein poröses, insbesondere offenporiges, Material aus einem anderen der oben genannten Metalle oder Metalllegierungen oder aus einem nichtmetallischen Material sein. Alternativ ist das Material ein, beispielsweise metallisches oder nichtmetallisches, gesintertes poröses Material oder ein anderes, beispielsweise metallisches oder nichtmetallisches, poröses Material.

Eine erfindungsgemäße Fluidförderanordnung umfasst die Pumpvorrichtung und ein Reservoir mit einem mittels der Pumpvorrichtung zu fördernden Fluid. Die Fluidförderanordnung wird beispielsweise in einem Fahrzeug verwendet. Die Fluidförderanordnung ist beispielsweise als ein Fluidkreislauf, insbesondere Ölkreislauf, beispielsweise Motorölkreislauf, des Fahrzeugs ausgebildet oder ein Bestandteil eines solche Kreislaufs. Das Reservoir ist dabei ein fluiddichter oder zumindest im Wesentlichen fluiddichter Innenraum dieses Kreislaufs, aus welchem die Pumpe das Fluid fördert und in welchen es zurückfließt. Das die mindestens eine Kühleinheit durchströmende Fluid, d. h. der Anteil des von der Pumpe geförderten Fluids, welcher die mindestens eine Kühleinheit durchströmt, strömt dann vorteilhafterweise auch wieder in dieses Reservoir zurück.

Bei anderen Anwendungsmöglichkeiten für die Pumpvorrichtung kann alternativ vorgesehen sein, dass die Pumpe das Fluid aus dem Reservoir fördert und das Fluid nicht wieder in das Reservoir zurückströmt. In diesem Fall strömt zweckmäßigerweise auch der Anteil des von der Pumpe geförderten Fluids, welcher durch die mindestens eine Kühleinheit strömt, nicht wieder in dieses Reservoir zurück.

Mit der erfindungsgemäßen Fluidförderanordnung werden die oben bereits geschilderten Vorteile erzielt.

In einem erfindungsgemäßen Verfahren zum Kühlen des elektrischen Antriebsmotors der Pumpvorrichtung wird zumindest ein Anteil des mittels der Pumpe geförderten Fluids durch die mindestens eine Kühleinheit geleitet. Dadurch werden die oben bereits geschilderten Vorteile erzielt. Insbesondere wird dadurch eine effiziente Kühlung des elektrischen Antriebsmotors erreicht. Wie bereits beschrieben, wird der Anteil des von der Pumpe geförderten und die Kühleinheit durchströmenden Fluids beispielsweise in das Reservoir, aus welchem es die Pumpe gefördert hat, zurückgeleitet, insbesondere bei einem Kreislauf, insbesondere einem Ölkreislauf eines Fahrzeugs, oder es wird an eine andere Stelle abgeleitet.

Ausführungsbeispiele der Erfindung werden im Folgenden anhand von Zeichnungen näher erläutert.

Dabei zeigen:
- Figur 1: schematisch eine Schnittdarstellung einer Ausführungsform einer Pumpvorrichtung,
- Figur 2: schematisch eine Wärmeabgabe der Pumpvorrichtung aus Figur 1,
- Figur 3: schematisch eine Schnittdarstellung einer weiteren Ausführungsform einer Pumpvorrichtung,
- Figur 4: schematisch eine Wärmeabgabe der Pumpvorrichtung aus Figur 3, und
- Figur 5: schematisch eine Schnittdarstellung eines elektrischen Antriebsmotors und einer daran angeordneten Kühleinheit.

Einander entsprechende Teile sind in allen Figuren mit den gleichen Bezugszeichen versehen.

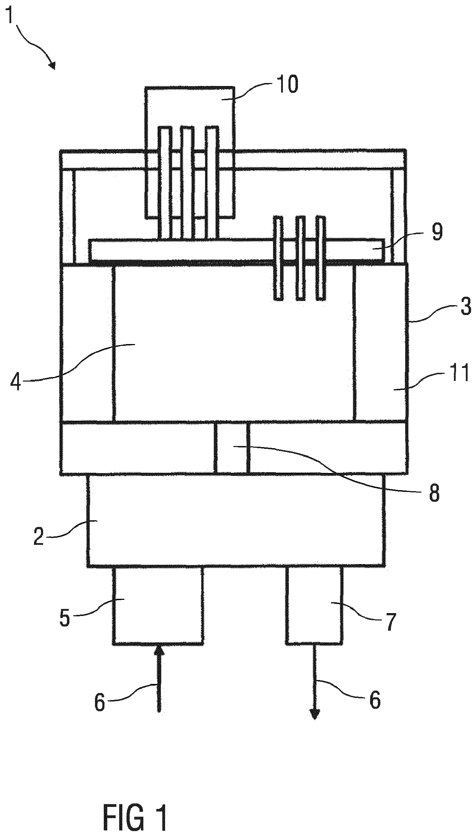

Figur 1 zeigt eine schematische Schnittdarstellung einer Ausführungsform einer Pumpvorrichtung 1. Die Pumpvorrichtung 1 umfasst eine Pumpe 2 und eine Antriebseinheit 3 mit einem beispielsweise als bürstenloser Gleichstrommotor ausgebildeten elektrischen Antriebsmotor 4 für diese Pumpe 2, d. h. zum Antrieb der Pumpe 2. Eine solche Pumpvorrichtung 1 wird beispielsweise in einem Fahrzeug verwendet, insbesondere für einen Fluidkreislauf des Fahrzeugs, beispielsweise als Ölpumpvorrichtung für einen Ölkreislauf, zum Beispiel für einen Motorölkreislauf eines Antriebsmotors des Fahrzeugs.

Die Pumpe 2 weist einen Pumpeneinlass 5 zum Ansaugen eines mit der Pumpe 2 zu fördernden Fluids 6 und einen Pumpenauslass 7 zum Ausstoßen des geförderten Fluids 6 auf.

Der elektrische Antriebsmotor 4 ist im dargestellten Beispiel über eine Welle 8 mit der Pumpe 2 gekoppelt. Des Weiteren ist der elektrische Antriebsmotor 4 über eine Leiterplatte 9, welche vorteilhafterweise weitere hier nicht dargestellte Komponenten, insbesondere elektronische Bauteile, insbesondere zur Steuerung und/oder Regelung des elektrischen Antriebsmotors 4, aufweist, mit einem elektrischen Anschluss 10 zur elektrischen Kontaktierung der Antriebseinheit 3 verbunden.

Der elektrische Antriebsmotor 4 ist in einem Gehäuse 11 angeordnet. Das Gehäuse 11 ist beispielsweise als ein Metallgehäuse ausgebildet, welches zum Beispiel gegossen oder gepresst ist.

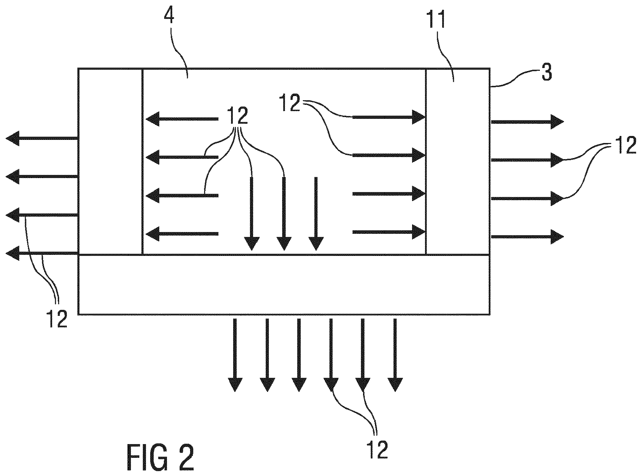

Während eines Betriebs der Pumpvorrichtung 1 erwärmt sich der elektrische Antriebsmotor 4. Bei der Ausführungsform der Pumpvorrichtung 1 gemäß Figur 1 ist vorgesehen, dass eine Abwärme 12 des elektrischen Antriebsmotors 4 über das Gehäuse 11 an eine äußere Umgebung der Pumpvorrichtung 1 abgegeben wird, wie in Figur 2 schematisch dargestellt. Der elektrische Antriebsmotor 4 bildet dabei eine Wärmequelle und das Gehäuse 11 eine Wärmesenke. Eine Wärmeabgabe vom elektrischen Antriebsmotor 4 erfolgt durch Wärmeübertragung vom elektrischen Antriebsmotor 4 auf das Gehäuse 11 und vom Gehäuse 11, insbesondere durch Konvektion, an die äußere Umgebung, welche gegenüber dem Gehäuse 11 eine Wärmesenke bildet, zu der das Gehäuse 11, welches gegenüber der äußeren Umgebung als Wärmequelle wirkt, die Wärme, d. h. die Abwärme 12 des elektrischen Antriebsmotors 4, abführt.

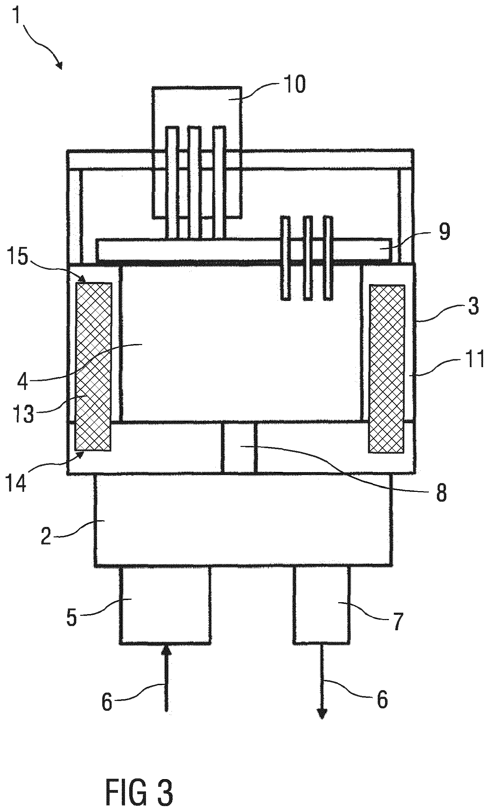

Figur 3 zeigt eine im Vergleich zu Figur 1 wesentlich verbesserte Ausführungsform der Pumpvorrichtung 1. Auch bei dieser Ausführungsform umfasst die Pumpvorrichtung 1 die Pumpe 2 und die Antriebseinheit 3 mit dem beispielsweise als bürstenloser Gleichstrommotor ausgebildeten elektrischen Antriebsmotor 4 für diese Pumpe 2, d. h. zum Antrieb der Pumpe 2. Auch diese Ausführungsform der Pumpvorrichtung 1 wird beispielsweise in einem Fahrzeug verwendet, insbesondere für einen Fluidkreislauf des Fahrzeugs, beispielsweise als Ölpumpvorrichtung für einen Ölkreislauf, zum Beispiel für einen Motorölkreislauf eines Antriebsmotors des Fahrzeugs.

Die Pumpe 2 weist auch hier den Pumpeneinlass 5 zum Ansaugen des mit der Pumpe 2 zu fördernden Fluids 6 und den Pumpenauslass 7 zum Ausstoßen des geförderten Fluids 6 auf.

Der elektrische Antriebsmotor 4 ist auch bei dem in Figur 3 dargestellten Beispiel über die Welle 8 mit der Pumpe 2 gekoppelt. Des Weiteren ist der elektrische Antriebsmotor 4 auch hier über die Leiterplatte 9, welche vorteilhafterweise weitere hier nicht dargestellte Komponenten, insbesondere elektronische Bauteile, insbesondere zur Steuerung und/oder Regelung des elektrischen Antriebsmotors 4, aufweist, mit dem elektrischen Anschluss 10 zur elektrischen Kontaktierung der Antriebseinheit 3 verbunden.

Der elektrische Antriebsmotor 4 ist auch in dieser Ausführungsform im Gehäuse 11 angeordnet. Das Gehäuse 11 ist auch hier beispielsweise als ein Metallgehäuse ausgebildet, welches zum Beispiel gegossen oder gepresst ist.

Bei dieser wesentlich verbesserten Ausführungsform der Pumpvorrichtung 1 ist vorgesehen, dass die Antriebseinheit 3 mindestens eine Kühleinheit 13 zum Kühlen des elektrischen Antriebsmotors 4 aufweist, die mit der Pumpe 2 fluidisch verbunden ist, insbesondere indem am Pumpenauslass 7 der Pumpe 2 ein Abzweig vorgesehen ist, welcher mit einem Kühleinheiteinlass 14 der mindestens einen Kühleinheit 13 fluidisch verbunden ist.

Vorteilhafterweise ist, insbesondere wenn die Pumpvorrichtung 2 Bestandteil eines Fluidkreislaufs, beispielsweise eines Ölkreislaufs, insbesondere eines Motorölkreislaufs des Antriebsmotors des Fahrzeugs, ist, ein Kühleinheitauslass 15 der mindestens einen Kühleinheit 13 mit dem Pumpeneinlass 5 der Pumpe 2 fluidisch verbunden. Diese fluidische Verbindung kann auf direkte Weise erfolgen, indem beispielsweise eine Verbindungsleitung den Kühleinheitauslass 15 mit einem Abzweig des Pumpeneinlasses 5 verbindet, oder auf indirekte Weise erfolgen, indem diese Verbindungsleitung beispielsweise in einen anderen Bereich eines Reservoirs mündet, aus welchem die Pumpe 2 das zu fördernde Fluid 6 ansaugt, beispielsweise in eine Ölwanne des Ölkreislaufs. Bei einem Kreislauf bildet beispielsweise ein gesamter fluiddichter oder zumindest im Wesentlichen fluiddichter Innenraum des Kreislaufs das Reservoir, in welches der Kühleinheitauslass 15 oder die mit diesem verbundene Verbindungsleitung mündet.

Eine Flussrichtung des Fluids 6 durch die mindestens eine Kühleinheit 13 erfolgt insbesondere vom Kühleinheiteinlass 14 zum Kühleinheitauslass 15.

In den dargestellten Beispielen sind der Kühleinheiteinlass 14 und der Kühleinheitauslass 15 an gegenüberliegenden Stirnseiten der Kühleinheit 13 angeordet. In anderen Beispielen sind auch andere Anordnungen des Kühleinheiteinlasses 14 und/oder Kühleinheitauslasses 15 möglich, beispielsweise an jeweils einem Umfangsseitenbereich der mindestens einen Kühleinheit 13, vorteilhafterweise sich gegenüberliegend.

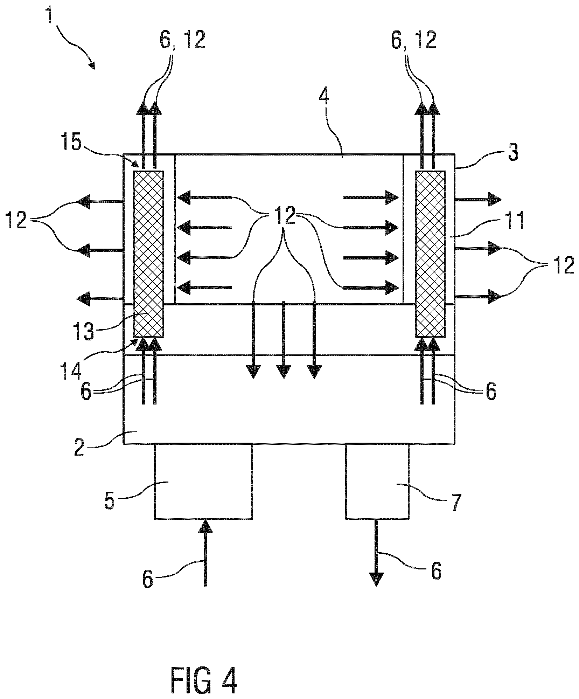

Figur 4 zeigt die mittels dieser mindestens einen Kühleinheit 13 ermöglichte Kühlung, insbesondere Flüssigkeitskühlung, des elektrischen Antriebsmotors 4. Die Abwärme 12 des elektrischen Antriebsmotors 4 wird, zumindest teilweise, über die Kühleinheit 13 auf das die Kühleinheit 13 durchströmende Fluid 6 übertragen und auf diese Weise zusammen mit dem Fluid 6 aus der Antriebseinheit 3 abgeführt.

Im dargestellten Beispiel wird zusätzlich, wie bei der Ausführungsform gemäß Figur 1, ein Teil der Abwärme 12 des elektrischen Antriebsmotors 4 auch über das Gehäuse 11 an die äußere Umgebung abgeführt, es erfolgt neben dieser Kühlung durch Wärmeabgabe über das Gehäuse 11 an die äußere Umgebung eine zusätzliche Kühlung durch die mindestens eine Kühleinheit 13, indem ein Teil der Abwärme 12 über das Fluid 6 abgeführt wird.

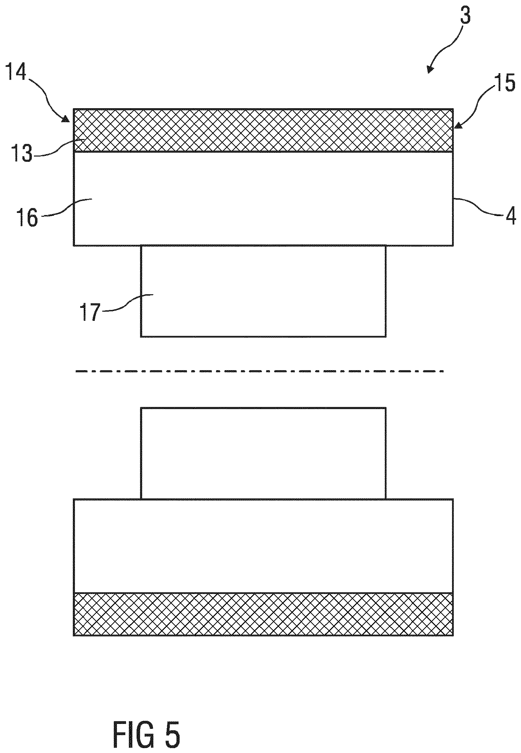

Die mindestens eine Kühleinheit 13 ist beispielsweise in einem Gehäuseinnenraum und/oder, wie in Figur 3 gezeigt, in einer Gehäusewand des Gehäuses 11 der Antriebseinheit 3 angeordnet. Sie ist insbesondere, direkt oder über das Gehäuse 11, mit dem elektrischen Antriebsmotor 4 thermisch kontaktiert, beispielsweise indem sie direkt am elektrischen Antriebsmotor 4 anliegt, zum Beispiel an einem Stator 16 des elektrischen Antriebsmotors 4, wie beispielsweise in Figur 5 gezeigt, oder indem das Gehäuse 11, in welchem, insbesondere in dessen Gehäusewand, die zumindest eine Kühleinheit 13 angeordnet ist, direkt am elektrischen Antriebsmotor 4 anliegt, wie in den Figuren 3 und 4 gezeigt. Die mindestens eine Kühleinheit 13 ist hier über die Gehäusewand, in welcher sie angeordnet ist, mit dem elektrischen Antriebsmotor 4 thermisch kontaktiert, indem sie mit der Gehäusewand thermisch kontaktiert ist und indem die Gehäusewand am elektrischen Antriebsmotor 4, beispielsweise an dessen Stator 16, anliegt und mit diesem thermisch kontaktiert ist.

Die mindestens eine Kühleinheit 13 ist insbesondere als eine Buchse ausgebildet, d. h. sie weist insbesondere einen ringförmigen Querschnitt mit einer einem inneren Hohlraum zur Anordnung des elektrischen Antriebsmotors 4 zugewandten Innenwand und einer davon radial beabstandeten Außenwand auf. Der elektrische Antriebsmotor 4 ist dann in dem von der mindestens einen Kühleinheit 13 zumindest umfangsseitig umschlossenen inneren Hohlraum angeordnet und ist somit vorteilhafterweise von der zumindest einen Kühleinheit 13 zumindest umfangsseitig umschlossen. Ein Innenraum zwischen der Innenwand und der Außenwand der mindestens einen Kühleinheit 13 ist von dem Fuid 6 durchströmt oder durchströmbar. Dadurch wird eine gleichmäßige umfangsseitige Kühlung des elektrischen Antriebsmotors 4 erreicht.

Figur 5 zeigt eine schematisch vereinfachte Darstellung einer solchen Lösung, bei welcher die mindestens eine Kühleinheit 13 umfangsseitig an einer Außenseite des Stators 16 des den Stator 16 und einen Rotor 17 umfassenden elektrischen Antriebsmotors 4 angeordnet ist.

Die mindestens eine Kühleinheit 13 umfasst in einer möglichen Ausführungsform, insbesondere zwischen ihrer Innenwand und Außenwand, ein von dem Fluid 6 durchströmbares oder durchströmtes poröses Material oder ist aus einem solchen Material ausgebildet. Dieses Material ist beispielsweise ein metallisches Material, beispielsweise aus Kupfer, zum Beispiel ein metallischer Schaum aus Kupfer, d. h. ein poröses, insbesondere offenporiges, Kupfermaterial. Durch die poröse Struktur wird eine große vom Fluid 6 umströmte Innenoberfläche der mindestens einen Kühleinheit 13 erreicht, wodurch eine besonders gute Wärmeübertragung auf das Fluid 6 erreicht wird. Das Material ist insbesondere ein metallisches oder nichtmetallisches poröses Material. Beispielsweise kann das Material ein gesintertes poröses Material sein.

Eine Fluidförderanordnung umfasst eine solche Pumpvorrichtung 1 und ein Reservoir mit dem mittels der Pumpvorrichtung 1 zu fördernden Fluid 6. Das Reservoir ist beispielsweise der Fluidkreislauf des Fahrzeugs, insbesondere der Ölkreislauf, beispielsweise des Antriebsmotors, des Fahrzeugs.

In einem Verfahren zum Kühlen des elektrischen Antriebsmotors 4 wird zumindest ein Anteil des mittels der Pumpe 2 geförderten Fluids 6 durch die mindestens eine Kühleinheit 13 geleitet. Dadurch wird die Flüssigkeitskühlung des elektrischen Antriebsmotors 4 erreicht, indem zumindest ein Teil der Abwärme 12 des elektrischen Antriebsmotors 4 vom elektrischen Antriebsmotor 4 über die mindestens eine Kühleinheit 13 auf das diese durchströmende Fluid 6 übertragen und mittels des Fluids 6 aus der Kühleinheit 13 und somit aus der Antriebseinheit 3 abtransportiert wird. Das Fluid 6 strömt dann beispielsweise aus der Kühleinheit 13 in das Reservoir zurück und kann dann, beispielsweise nachdem es, zum Beispiel nach einem Durchströmen eines Ölkühlers, abgekühlt ist, wieder von der Pumpe 2 angesaugt werden. Das in die mindestens eine Kühleinheit 13 einströmende Fluid 6 weist dabei eine geringere Temperatur als der elektrische Antriebsmotor 4 auf, um die Wärmeübertragung auf das Fluid 6 zu ermöglichen, beispielsweise eine Temperaturdifferenz zur Temperatur des elektrischen Antriebsmotors 4 von 10, 15, 20, 25, 30 oder 35 Kelvin. Das aus der mindestens einen Kühleinheit 13 ausströmende Fluid 6 weist dann eine höhere Temperatur auf als das in die mindestens eine Kühleinheit 13 einströmende Fluid 6.

Durch die beschriebene Lösung wird eine besonders effiziente Kühlung des elektrischen Antriebsmotors 4 erreicht, da ein bereits vorhandenes und aufgrund der Förderung durch die Pumpe 2 bereits strömendes Fluid 6 zur Flüssigkeitskühlung des elektrischen Antriebsmotors 4 verwendet wird. Es ist somit keine zusätzliche Flüssigkeitskühlvorrichtung mit separater Kühlmediumpumpe, separatem Kühlmedium und separatem Kühler erforderlich. Durch die beschriebene Lösung wird ein Wirkungsgrad des elektrischen Antriebsmotors 4 verbessert, wodurch dieser kleiner ausgebildet sein kann. Dadurch werden Gewichts- Bauraum- und Kostenvorteile erreicht. Beispielsweise ist bereits eine als Buchse ausgebildete Kühleinheit 13 ausreichend, welche zwischen ihrer Innenwand und Außenwand eine Dicke von drei Millimeter oder c. drei Millimeter aufweist.

Ein volumetrischer Wirkungsgradverlust der beschriebenen Lösung ist gering, insbesondere da nur ein kleiner Anteil des von der Pumpe 2 geförderten Fluids 6 durch die mindestens eine Kühleinheit 13 geleitet wird.

### Bezugszeichenliste

- 1: Pumpvorrichtung
- 2: Pumpe
- 3: Antriebseinheit
- 4: elektrischer Antriebsmotor
- 5: Pumpeneinlass
- 6: Fluid
- 7: Pumpenauslass
- 8: Welle
- 9: Leiterplatte
- 10: elektrischer Anschluss
- 11: Gehäuse
- 12: Abwärme
- 13: Kühleinheit
- 14: Kühleinheiteinlass
- 15: Kühleinheitauslass
- 16: Stator
- 17: Rotor

## Patentansprüche

1. Pumpvorrichtung (1), umfassend eine Pumpe (2) und eine Antriebseinheit (3) mit einem elektrischen Antriebsmotor (4) für die Pumpe (2),
wobei die Antriebseinheit (3) mindestens eine Kühleinheit (13) zum Kühlen des elektrischen Antriebsmotors (4) aufweist, die mit der Pumpe (2) fluidisch verbunden ist, **dadurch gekennzeichnet, dass**
die mindestens eine Kühleinheit (13) als eine Buchse ausgebildet ist, welche den elektrischen Antriebsmotor (4) zumindest umfangsseitig umschließt, und dass,
die mindestens eine Kühleinheit (13) ein poröses, insbesondere metallisches oder nichtmetallisches, Material umfasst oder aus einem solchen Material ausgebildet ist.

2. Pumpvorrichtung (1) nach Anspruch 1,
**dadurch gekennzeichnet, dass** an einem Pumpenauslass (7) der Pumpe (2) ein Abzweig vorgesehen ist, welcher mit einem Kühleinheiteinlass (14) der mindestens einen Kühleinheit (13) fluidisch verbunden ist.

3. Pumpvorrichtung (1) nach einem der vorhergehenden Ansprüche,
**dadurch gekennzeichnet, dass** ein Kühleinheitauslass (15) der mindestens einen Kühleinheit (13) mit einem Pumpeneinlass (5) der Pumpe (2) fluidisch verbunden ist.

4. Pumpvorrichtung (1) nach einem der vorhergehenden Ansprüche,
**dadurch gekennzeichnet, dass** die mindestens eine Kühleinheit (13) in einem Gehäuseinnenraum und/oder in einer Gehäusewand eines Gehäuses (11) der Antriebseinheit (3) angeordnet ist.

5. Pumpvorrichtung (1) nach einem der vorhergehenden Ansprüche,
**dadurch gekennzeichnet, dass** das Material der Kühleinheit (13) ein Kupferschaum oder ein gesintertes poröses Material ist.

6. Pumpvorrichtung (1) nach einem der vorhergehenden Ansprüche,
ausgebildet als eine Pumpvorrichtung (1) für ein Fahrzeug, insbesondere als eine Ölpumpvorrichtung, insbesondere für einen Ölkreislauf des Fahrzeugs.

7. Fluidförderanordnung, umfassend eine Pumpvorrichtung (1) nach einem der Ansprüche 1 bis 6 und ein Reservoir mit einem mittels der Pumpvorrichtung (1) zu fördernden Fluid (6).

8. Verfahren zum Kühlen eines elektrischen Antriebsmotors (4) einer Pumpvorrichtung (1) nach einem der Ansprüche 1 bis 6, wobei zumindest ein Anteil eines mittels der Pumpe (2) geförderten Fluids (6) durch die mindestens eine Kühleinheit (13) geleitet wird.

## Claims

1. Pump device (1), comprising a pump (2) and a drive unit (3) with an electric drive motor (4) for the pump (2),
wherein the drive unit (3) has at least one cooling unit (13) for cooling the electric drive motor (4), which cooling unit is connected fluidically to the pump (2), **characterized in that** the at least one cooling unit (13) is designed as a bush which surrounds the electric drive motor (4) at least circumferentially, and **in that** the at least one cooling unit (13) comprises a porous, in particular metallic or non-metallic, material or is formed from such a material.

2. Pump device (1) according to Claim 1,
**characterized in that** a branch is provided at a pump outlet (7) of the pump (2) and is connected fluidically to a cooling-unit inlet (14) of the at least one cooling unit (13).

3. Pump device (1) according to either of the preceding claims,
**characterized in that** a cooling-unit outlet (15) of the at least one cooling unit (13) is connected fluidically to a pump inlet (5) of the pump (2).

4. Pump device (1) according to one of the preceding claims, **characterized in that** the at least one cooling unit (13) is arranged in a housing interior space and/or in a housing wall of a housing (11) of the drive unit (3).

5. Pump device (1) according to one of the preceding claims, **characterized in that** the material of the cooling unit (13) is a copper foam or a sintered porous material.

6. Pump device (1) according to one of the preceding claims, designed as a pump device (1) for a vehicle, in particular as an oil pump device, in particular for an oil circuit of the vehicle.

7. Fluid delivery arrangement, comprising a pump device (1) according to one of Claims 1 to 6 and a reservoir with a fluid (6) to be delivered by means of the pump device (1).

8. Method for cooling an electric drive motor (4) of a pump device (1) according to one of Claims 1 to 6, wherein at least a fraction of a fluid (6) delivered by means of the pump (2) is guided through the at least one cooling unit (13).

## Revendications

1. Dispositif de pompage (1) comprenant une pompe (2) et une unité d'entraînement (3) pourvue d'un moteur d'entraînement électrique (4) destiné à la pompe (2),
l'unité d'entraînement (3) comportant au moins une unité de refroidissement (13) qui est destinée à refroidir le moteur d'entraînement électrique (4) et qui est reliée fluidiquement à la pompe (2), **caractérisé en ce que** l'au moins une unité de refroidissement (13) est conçue comme une douille qui renferme au moins circonférentiellement le moteur d'entraînement électrique (4), et **en ce que** l'au moins une unité de refroidissement (13) comprend un matériau poreux, en particulier métallique ou non métallique, ou est formée d'un tel matériau.

2. Dispositif de pompage (1) selon la revendication 1,
**caractérisé en ce qu'**une dérivation est prévue au niveau d'une sortie (7) de la pompe (2) et est reliée fluidiquement à une entrée (14) de l'au moins une unité de refroidissement (13).

3. Dispositif de pompage (1) selon l'une des revendications précédentes,
**caractérisé en ce qu'**une sortie (15) de l'au moins une unité de refroidissement (13) est reliée fluidiquement à une entrée (5) de la pompe (2) .

4. Dispositif de pompage (1) selon l'une des revendications précédentes,
**caractérisé en ce que** l'au moins une unité de refroidissement (13) est disposée dans un espace intérieur et/ou une paroi d'un boîtier (11) de l'unité d'entraînement (3).

5. Dispositif de pompage (1) selon l'une des revendications précédentes,
**caractérisé en ce que** le matériau de l'unité de refroidissement (13) est une mousse de cuivre ou un matériau poreux fritté.

6. Dispositif de pompage (1) selon l'une des revendications précédentes,
lequel est conçu comme un dispositif de pompage (1) destiné à un véhicule, en particulier comme un dispositif de pompage d'huile, destiné en particulier à un circuit d'huile du véhicule.

7. Ensemble de distribution de fluide, comprenant un dispositif de pompage (1) selon l'une des revendications 1 à 6 et un réservoir pourvu d'un fluide (6) à distribuer au moyen du dispositif de pompage (1).

8. Procédé de refroidissement d'un moteur d'entraînement électrique (4) d'un dispositif de pompage (1) selon l'une des revendications 1 à 6, au moins une partie d'un fluide (6) distribué au moyen de la pompe (2) étant guidée à travers l'au moins une unité de refroidissement (13).
